# EUROPÄISCHE PATENTSCHRIFT

(11) **EP 1 375 833 B1**
(45) Veröffentlichungstag und Bekanntmachung des Hinweises auf die Patenterteilung: **02.11.2005**
(21) Anmeldenummer: 03012215.4
(22) Anmeldetag: 06.06.2003
(51) Int. Cl.: F01L 1/344, F02D 13/08

(54) **Verfahren zum Betreiben einer Brennkraftmaschine, und Brennkraftmaschine mit Steuergerät zum Durchführen des Verfahrens**
Method for operating an internal combustion engine, and internal combustion engine with controlling device for carrying out the method
Procédé pour faire fonctionner un moteur à combustion interne, et moteur à combustion interne avec élément de contrôle pour mettre en oeuvre le procédé

(30) Priorität: 28.06.2002 DE 10229029
(43) Veröffentlichungstag der Anmeldung: 02.01.2004
(73) Patentinhaber: ROBERT BOSCH GMBH, 70442 Stuttgart (DE); AUDI AG, 85045 Ingolstadt (DE)
(72) Erfinder: Mezger, Werner, 74246 Eberstadt (DE); Haffelder, Joerg, 74906 Bad Rappenau (DE); Ludwig, Martin, 71665 Vaihingen (DE); Kaulen, Wilfried, 71729 Erdmannhausen (DE)

(56) Entgegenhaltungen:
- EP-A- 0 733 782
- EP-A- 0 735 245
- EP-A- 0 799 976
- EP-A- 1 312 773
- DE-A- 10 103 876
- DE-A- 19 534 844
- US-A- 5 623 902
- PATENT ABSTRACTS OF JAPAN vol. 1999, no. 11, 30. September 1999 (1999-09-30) & JP 11 148381 A (TOYOTA MOTOR CORP), 2. Juni 1999 (1999-06-02)
- PATENT ABSTRACTS OF JAPAN vol. 1995, no. 08, 29. September 1995 (1995-09-29) & JP 07 119526 A (TOYOTA MOTOR CORP), 9. Mai 1995 (1995-05-09)

## Beschreibung

Die Erfindung betrifft ein Verfahren zum Betreiben einer Brennkraftmaschine, ein Steuergerät zum Durchführen eines erfindungsgemäßen Verfahrens sowie eine Brennkraftmaschine mit variabler Nockenwellenverstellung.

Bei Brennkraftmaschinen erfolgt das Betätigen der Ein- und Auslassventile mittels auf Nockenwellen angeordneten Nocken, wobei die Nockenwellen in Abhängigkeit der Drehung der Kurbelwelle angetrieben sind. Damit der Zeitpunkt des Öffnen und Schließens der Ventile gegenüber der Bewegung der Kurbelwelle veränderbar ist, können Nockenwellensteller vorgesehen sein. Die Nockenwellensteller beeinflussen die Winkellage der Nocken bezüglich einer Referenzposition. Dabei können die Nockenwellen für die Betätigung der Einlassventile unabhängig von den Nockenwellen für die Betätigung der Auslassventile veränderbar sein. So kann auch die relative Lage der Ventilöffnungszeiten zueinander, beispielsweise die Überlappung der Öffnung von Ein- und Auslassventil, verändert werden.

Eine bekannte Form von Nockenwellenverstellern sind sogenannte Flügelzellenversteller. Bei Flügelzellenverstellern erfolgt das Verstellen durch Verschwenken der Nockenwelle bezüglich einer Referenzposition. Das Verschwenken erfolgt dabei über radial arbeitende hydraulische Steller. Hierzu trennt ein als Flügel ausgebildeter Kolben (Rotor) zwei druckbeaufschlagbare Arbeitskammern om Stator voneinander, wobei die Arbeitskammern im Gehäuse ausgebildet sind, während die Kolben - Flügel - lagefest mit der Nockenwelle verbunden sind. Durch unterschiedliche Beaufschlagung der Arbeitskammern mit Öl wird der Flügel in seiner Lage zwischen den Kammern und somit bezüglich dem Gehäuse verschwenkt, eine Arbeitskammer vergrößert ihr Volumen zu Lasten der anderen. Die Stellung der Nocken bezüglich dem Gehäuse wird demgemäß durch das Verschwenken der Flügel im Gehäuse verändert. Nachdem das Gehäuse in feststehender Beziehung zu der Kurbelwelle rotiert, lässt sich so die Stellung der Nocken bezüglich der Kurbelwelle verändern.

Es sind Ausführungsformen derartiger Flügelzellensteller bekannt, bei denen die druckseitige Ölzufuhr vom Motorölkreislauf gespeist wird. Da beim Anlassen der Brennkraftmaschine der Öldruck im Motorölkreislauf noch nicht aufgebaut ist, ist die Position der Flügel eines Flügelzellenverstellers zu diesem Zeitpunkt nicht eindeutig festgelegt, da keine der beiden Kammern in erforderlicher Weise druckbeaufschlagt sein kann. Deshalb ist es bei solchen Ausführungsformen eine mechanisch arretierbare Stellung der Flügel vorgesehen, die vor dem Abschalten der Brennkraftmaschine angefahren und verrastet wird, so dass beim Anlassen der Brennkraftmaschine und wenigstens bis zum Bereitstehen eines entsprechenden Öldrucks im Motorölkreislauf eine bestimmte Stellung der Nockenwelle gegeben ist. Diese Stellung entspricht dabei häufig der im Leerlauf der Brennkraftmaschine eingenommenen Stellung der Nockenwelle, die meist in einem der Hubenden der Kolben in den Arbeitskammern liegt. Sie bildet häufig die Referenzposition bezüglich der die Verstellung der Nockenwelle bestimmt wird.

Aus der EP 1 312 773 ist bereits ein Verfahren zur Ansteuerung einer verstellbaren Nockenwelle bekannt, bei der bei einer Abweichung eines Istwerts der Nockenwelle vom vorgebbaren Sollwinkel die Leerlaufdrehzahl erhöht wird, wobei die Sollwerte durch ein Motormanagementsystem vorgegeben werden und in einem Sollwinkelkennfeld hinerlegt sind.

Aus der EP 0 735 245 ist ferner eine Vorrichtung zur Steuerung von Ventilsteuerzeiten bekannt, bei der Soll-Ventilsteuerzeiten in Abhängigkeit von Betriebsparametem, wie z. Öldruck, Motordrehzahl etc. bestimmt werden.

Aus der JP-A-07119526 und der JP-A-11148381 sind jeweils Verfahren bekannt, die bei einem Abweichen von Soll- und Ist-Ventilsteuerzeiten einen Ausfall oder eine Störung einer variablen Ventilsteuerung erkennen. Wird eine Abweichung erkannt, ist es vorgesehen, die Drehzahl, insbesondere die Leerlaufdrehzahl, zu kontrollieren bzw. zu erhöhen, um beispielsweise ein Aussetzen der Brennkraftmaschine zu vermeiden.

Aus der DE-A-31 34 991 ist bekannt, die Drehzahl zu erhöhen, wenn zum Beispiel in einem Schubbetrieb bei fallender Motordrehzahl, der Drehzahlgradient einen Grenzwert überschreitet.

Bei hydraulisch vom Motorölkreislauf gespeisten Nockenwellenverstellern kann das Problem auftauchen, dass bei ungünstigen Bedingungen während eines Überganges der Brennkraftmaschine in den Leerlauf-Betriebszustand der Öldruck rasch abfällt. Es kann sein, dass schon vor dem Erreichen der Leerlaufstellung oder einer evtl. davon abweichenden arretierbaren Stellung durch den Nockenwellensteller der Druck im Motorölkreislauf zu gering wird und die gewünschte Stellung nicht mehr sicher erreicht wird.

Durch ein erfindungsgemäßes Verfahren zum Betreiben einer Brennkraftmaschine wird es vermieden, dass während des Betriebes des Brennkraftmaschine ein undefinierter Zustand des Nockenwellenverstellers auftritt.

Eine Brennkraftmaschine, wie sie insbesondere zur Verwendung in einem Kraftfahrzeug geeignet ist, weist eine variable Nockenwellenverstellung auf, bei der die Winkellage von Ventile der Brennkraftmaschine betätigenden, auf Nockenwellen angeordneten Nocken bezüglich einer Referenzposition in Abhängigkeit wenigstens der Drehzahl veränderbar ist. Dabei erfolgt die Verstellung der Nocken durch einen hydraulisch betätigten Nockenwellensteller. Dieser weist durch einen Kolben voneinander getrennte Paare von Arbeitskammern auf, welche wechselweise druckbeaufschlagbar sind. Der maximale Hub zwischen den beiden Betätigungsendlagen definiert die Verstellbarkeit der Winkellage der Nocken bezüglich ihrer Referenzposition. Bei einem erfindungsgemäßen Verfahren erfolgt die Bestimmung der Leerlaufdrehzahl in Abhängigkeit der Stellung des Nockenwellenstellers bezüglich der Referenzposition.

Durch die Bestimmung der Leerlaufdrehzahl in Abhängigkeit der Position des Nockenwellenstellers wird sichergestellt, dass zumindest immer dann, wenn eine Veränderung der Position des Nockenwellenstellers erforderlich ist, beispielsweise durch Anheben der Leerlaufdrehzahl, der Öldruck in dem Motorölkreislauf ausreichend hoch ist, um Stellbewegungen des Nockenwellenstellers auszuführen.

Auch bei für die Nockenwellenverstellung ungünstigen Betriebsbedingungen der Brennkraftmaschine, beispielsweise unmittelbar nach dem Anlassen oder bei einem raschen Rückführen der Drehzahl der Brennkraftmaschine in die Leerlaufdrehzahl (großer negativer Drehzahlgradient) oder bei hohen Betriebstemperaturen, die eine hohe Viskosität des Öls und damit ein schnelles Abfallen des Öldruckes bei sinkender Motordrehzahl zur Folge haben können, wird verhindert, dass vor dem Erreichen einer definierten Stellung der Nockenwelle der Öldruck des Motorölkreislaufes auf ein Maß absinkt, das ein definiertes Verstellen der Stellung des Nockenwellenstellers nicht mehr erlaubt.

Ein derartiges Verfahren findet insbesondere bei sogenannten Flügelzellenstellern Anwendung, bei denen die Versorgung mit Hydrauliköl von der Motordrehzahl abhängig ist. Dies ist insbesondere dann der Fall, wenn die Druckversorgung nicht durch einen eigenen Druckerzeuger erfolgt sondern beispielsweise durch den Motorölkreislauf gespeist ist. Dabei ist es für das Verfahren unerheblich ob es sich bei den Nockenwellenstellern um sogenannte 2-Punkt-Steller oder um kontinuierlich veränderbare Steller handelt.

Bei den sogenannten 2-Punkt-Stellern findet das Verstellen zwischen zwei definierten, vorgegebenen Stellungen der Nockenwelle bezüglich der Referenzposition statt. Die Stellungen werden dabei in der Regel durch die Hubendlagen des Kolbens in den Arbeitskammern definiert. Die eine Stellung ist häufig die Leerlaufstellung, die andere die Teil- oder Volllaststellung. Die Leerlaufstellung ist dabei zumeist als fixierbare Stellung des Nockenwellenstellers ausgebildet. Derartig ausgebildete Nockenwellensteller werden häufig für Nockenwellen verwendet, auf denen die Auslassventile betätigende Nocken angeordnet sind. Den 2-Punkt-Stellern entsprechende 3-Punkt- oder Mehrpunktsteller sind ebenfalls bekannt. Das erfindungsgemäße Verfahren kann bei derartigen Stellern in gleicher Weise Verwendung finden.

Bei kontinuierlich veränderbaren Nockenwellenstellern, ist es beispielsweise durch entsprechendes Ansteuern von Ein- und Auslassventilen der Arbeitskammern möglich, den Kolben zwischen den Arbeitskammern in beliebiger Stellung zwischen den beiden Betätigungsendlagen zu halten. In der Regel ist dabei auch eine der Stellungen, meist eine Betätigungsendlage - wobei diese häufig der Leerlaufdrehzahl zugeordnet ist und die Referenzposition bildet - als arretierbare Stellung ausgebildet. Derartige Steller finden insbesondere in Form von Flügelzellenstellern bei die Einlassventile betätigende Nocken aufweisenden Nockenwellen Verwendung. Sehr häufig werden auch Kombinationen von 2-Punkt-Stellern und kontinuierlichen Stellern verwendet, so dass beispielsweise an der den Auslassventilen der Brennkraftmaschine zugeordneten Nockenwellen 2-Punkt-Steller und an der den Einlassventilen zugeordneten Nockenwellen kontinuierlich veränderbare Steller verwendet werden.

Eine Ausgestaltung der Erfindung sieht vor, dass die Leerlaufdrehzahl der Brennkraftmaschine gegenüber einem vorgegebenen Sollwert auf einen erhöhten Zwischenwert angehoben wird. Dies erfolgt insbesondere solange die Stellung der Nockenwelle bezüglich der Referenzposition von einer vorgegebenen Stellung abweicht. Die Leerlaufdrehzahl wird dabei einer Steuerung der Brennkraftmaschine zugeführt, die deren Betrieb regelt und, falls über eine fahrerbetätigbare Eingabeeinrichtung nichts anderes vorgegeben wird, durch Steuern oder Regeln den Betrieb der Brennkraftmaschine in der Leerlaufdrehzahl aufrechterhält. Die dabei zu erzeugende Leerlaufdrehzahl kann somit gemäß dieser Ausgestaltung auf den erhöhten Zwischenwert angehoben werden. Zusätzlich kann es vorgesehen sein, dass der erhöhte Zwischenwert für die Leerlaufdrehzahl auch dann vorgegeben wird, wenn bei fallender Motordrehzahl der Drehzahlgradient einen Grenzwert überschreitet. Es wird also bei stark abfallender Motordrehzahl eine Erhöhung der Leerlaufdrehzahl herbeigeführt.

Vorteilhafte Ausgestaltungen der Erfindung sehen vor, dass die Motordrehzahl von dem erhöhten Zwischenwert wieder auf den vorgegebenen Sollwert abgesenkt wird, wenn ein Abbruchkriterium erfüllt ist. Ein mögliches Abbruchkriterium ist dabei das Erreichen der vorgegebenen Stellung der Nockenwelle bezüglich der Referenzposition. Soweit die vorgegebene Stellung eine arretierbare Stellung ist, kann dieses Kriterium auch dadurch ersetzt werden, dass darüber hinaus auch das Arretieren des Kolbens in dieser Stellung erfolgt sein muss. Ein weiteres mögliches Abbruchkriterium ist, dass die beispielsweise durch den Fahrer des Fahrzeugs vorgegebene Betriebsanforderung von der Leerlaufdrehzahl abweicht bzw. oberhalb des Zwischenwertes liegt, also von der Steuerung der Brennkraftmaschine ohnehin ein Teillastbetrieb eingesteuert wird. Aus Gründen des Komforts für den Fahrer eines Fahrzeuges kann es auch vorgesehen sein, dass die Zeitdauer der Erhöhung der Leerlaufdrehzahl auf den Zwischenwert auf ein vorgegebenes Zeitintervall begrenz ist. Das Zeitintervall kann dabei insbesondere so bemessen sein, dass üblicherweise vor Ablauf des Zeitintervalls die vorgegebene Stellung des Nockenwellenstellers erzeugt wurde. Das Zeitintervall kann daher beispielsweise auf höchstens 0,5 bis 1 Sekunde festgelegt werden, wenn man davon ausgeht, dass die Zeit die benötigt wird, um den Nockenwellensteller von einer in die andere Betätigungsendlage zu verfahren bei ca. 300 ms liegt.

Ein erfindungsgemäßes Verfahren kann insbesondere in Form eines Programms, das auf einem Rechengerät, wie einem Mikroprozessor ausführbar ist, vorliegen, das in einem Steuerelement, wie einem Read-Only-Memory (ROM) abgespeichert ist. Das Steuerelement kann insbesondere Teil eines Steuergerätes zur Steuerung des Nockenwellenstellers oder eines Steuergerätes zur Steuerung des Betriebes der Brennkraftmaschine sein.

Eine Brennkraftmaschine, insbesondere für ein Kraftfahrzeug, gemäß der Erfindung weist eine variable Nockenwellenverstellung auf. Diese Nockenwellenverstellung umfasst einen hydraulischen Nockenwellensteller zum Verstellen der Winkellage von Ventile der Brennkraftmaschine betätigenden, auf Nockenwellen angeordneten Nocken bezüglich einer Referenzposition . Das Verstellen der Stellung (Winkellage) des Nockenwellenstellers erfolgt dabei in Abhängigkeit wenigstens der Drehzahl der Brennkraftmaschine. Hierzu weist der Nockenwellensteller von einem Kolben voneinander getrennte Paare von Arbeitskammern auf, die wechselweise druckbeaufschlagbar sind. Der maximale Hub des Kolbens innerhalb der Arbeitskammern definiert dabei die Betätigungsendlagen des Stellers. Es ist ein Steuergerät zum Steuern der Stellung der Nockenwelle bezüglich der Referenzposition vorgesehen. Dabei ist die Leerlaufdrehzahl der Brennkraftmaschine durch das Steuergerät für die Brennkraftmaschine veränderbar.

Vorteilhafte Ausgestaltungen einer solchen Brennkraftmaschine sehen vor, dass eine im Leerlauf der Brennkraftmaschine einzusteuernde Stellung (Winkellage) des Nockenwellenstellers vorgegeben ist. Diese Stellung ist insbesondere als arretierbare Stellung ausgebildet. Dabei erfolgt durch das Steuergerät ein Erhöhen der Leerlaufdrehzahl auf einen Zwischenwert, soweit die Stellung des Nockenwellenstellers von der vorgegebenen Stellung abweicht.

Weitere vorteilhafte Ausgestaltungen der Erfindung sehen vor, dass der hydraulische Nockenwellensteller vom Ölkreislauf der Brennkraftmaschine gespeist ist. Es sind dann insbesondere Ein- und Auslassventile den Arbeitskammern zugeordnet, die durch das Steuergerät ansteuerbar sind, wodurch die Arbeitskammern gespeist bzw. entleert werden, wodurch das Volumen der Arbeitskammern und somit die Stellung des Kolbens des Nockenwellenstellers veränderbar ist, wodurch die Stellung (Winkellage) der Nocken bezüglich der Referenzposition veränderbar ist.

Erfindungsgemäße Ausgestaltungen sind nachfolgend auch anhand der in der Zeichnung dargestellten Ausführungsform näher erläutert; dabei zeigt:
- Fig. 1: das Blockdiagramm eines erfindungsgemäßen Verfahrens;
- Fig. 2: eine schematische Darstellung eines Nockenwellenstellers für eine erfindungsgemäße Brennkraftmaschine; und
- Fig. 3: eine schematische Darstellung einer erfindungsgemäßen Brennkraftmaschine

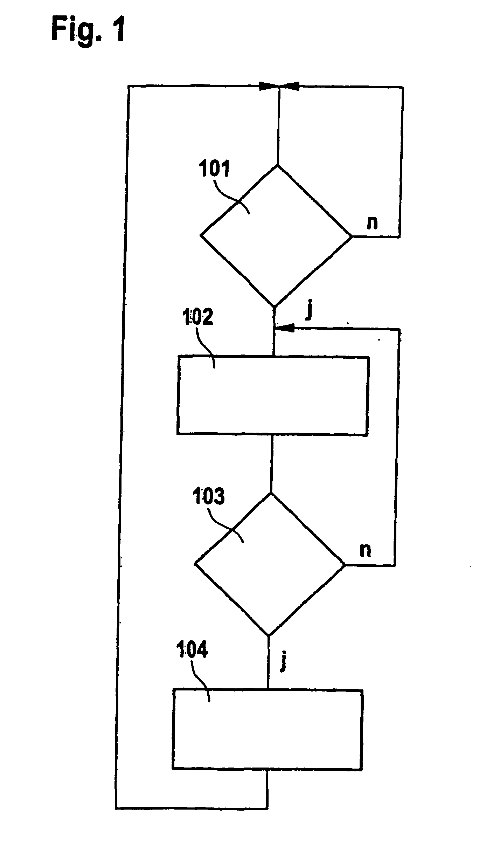

Die Fig. 1 zeigt das Blockdiagramm eines erfindungsgemäßen Verfahrens. Das Verfahren ist dazu bestimmt im Steuergerät für die Nockenwellenverstellung ausgeführt zu werden. Diese Steuergerät kann unabhängig von einem Motorsteuergerät sein oder aber in ein solches integriert sein.

Im Schritt 101 des erfindungsgemäßen Verfahrens wird überprüft, ob die Stellung des Nockenwellenstellers, also die Winkellage der Nockenwelle bezüglich einer Referenzposition, einer vorgegebenen Stellung entspricht. Diese Abfrage wird solange durchgeführt, wie die vorgegebene Stellung eingehalten ist. Bei der vorgegebenen Stellung handelt es sich nicht unbedingt um eine fest vorgegebene Stellung, diese Abfrage kann sich auch auf eine in dem Steuergerät in Abhängigkeit des Betriebszustandes der Brennkraftmaschine ermittelte und dem Steller als einzusteuernde Sollstellung vorgegebene Stellung der Nockenwelle handeln. Sobald die tatsächliche Stellung der Nockenwelle, die beispielsweise durch einen entsprechenden Sensor erfassbar ist, von der vorgegebenen Stellung abweicht, wird zum Schritt 102 übergegangen.

Gemäß dem Schritt 102 wird die Leerlaufdrehzahl der Brennkraftmaschine auf einen Zwischenwert angehoben. Ein entsprechendes Steuersignal wird der für die Regelung der Motordrehzahl zuständigen Motorsteuerung zugeführt. Der Zwischenwert ist dabei so gewählt, dass der bei dieser Drehzahl aufgebaute Öldruck im Motorölkreislauf ausreicht um eine Verstellung der Nockenwelle durch den Nockenwellensteller zu gewährleisten. Diese Drehzahl ist in Abhängigkeit der konstruktiven Ausgestaltung des Nockenwellenstellers und des Ölkreislaufes der Brennkraftmaschine zu bestimmen. Der Zwischenwert kann beispielsweise bei einer um ca. 400 Umdrehungen/Minute erhöhten Drehzahl liegen.

Anschließend wird gemäß dem Schritt 103 überprüft, ob eines der Abbruchkriterien erfüllt ist. Als Abbruchkriterium dient insbesondere das Erreichen der vorgegebenen Stellung durch die Nockenwelle. Weitere mögliche Abbruchkriterien können sich auf die Zeitdauer der Erhöhung der Leerlaufdrehzahl und den Betriebszustand der Brennkraftmaschine beziehen. Solange keines der Abbruchkriterien erfüllt ist, wird zum Schritt 102 zurückgesprungen, die Erhöhung der Leerlaufdrehzahl auf den Zwischenwert bleibt aufrechterhalten.

Sobald ein Abbruchkriterium erfüllt ist wird zum Schritt 104 gesprungen und die Leerlaufdrehzahl wieder auf den vorgegebenen Sollwert abgesenkt. Anschließend wird wieder zum Schritt 101 gesprungen.

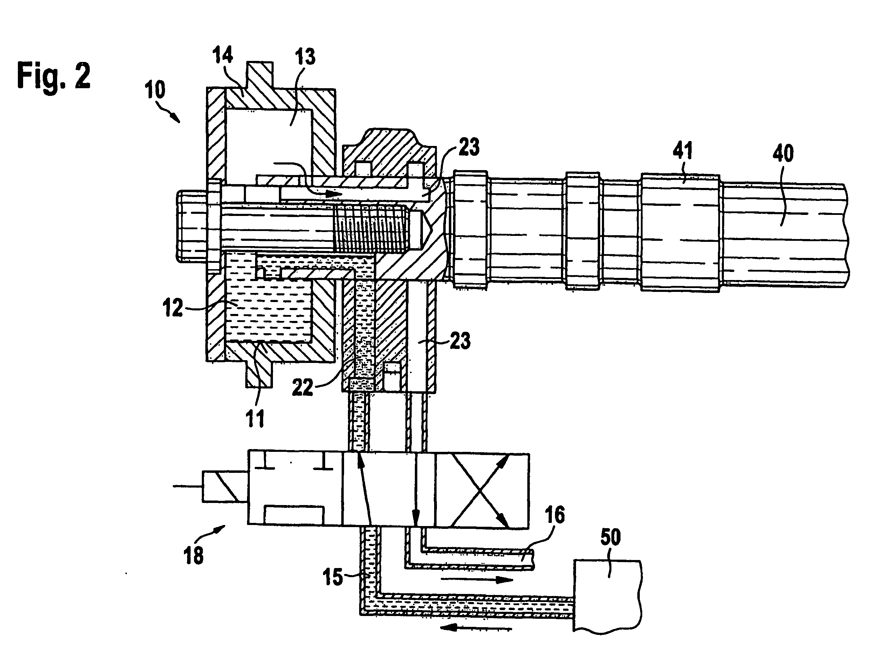

Die Figur 2 zeigt in schematischer, teilgeschnittener Darstellung einen Nockenwellensteller 10, wie er bei der Erfindung Anwendung finden kann. Über den Nockenwellensteller 10 ist die Winkellage der Nockenwelle 40 bezüglich einer Referenzposition veränderbar, die der Nockenwellensteller 10 beispielsweise im Leerlaufbetrieb einnimmt. Dabei kann die Referenzposition, die insbesondere in einem Winkel gegenüber einer Referenz, die sich mit der Kurbelwelle der Brennkraftmaschine mitdreht, ausgedrückt sein. Bei der Leerlaufstellung des Nockenwellenstellers 10 kann es sich dabei um eine arretierbare Stellung handeln, bei der eine kraft- und/oder formschlüssige Verbindung zwischen Nockenwellensteller 10 und Nockenwelle 40 herstellbar ist. Hierzu kann einem nicht dargestellten, einerseits angeordneten Steller ein Schaltsignal zugeführt werden, wodurch ein Sperrmittel die kraft- und/oder formschlüssige Verbindung, beispielsweise durch Eingriff eines Dornes in ein Langloch hergestellt werden.

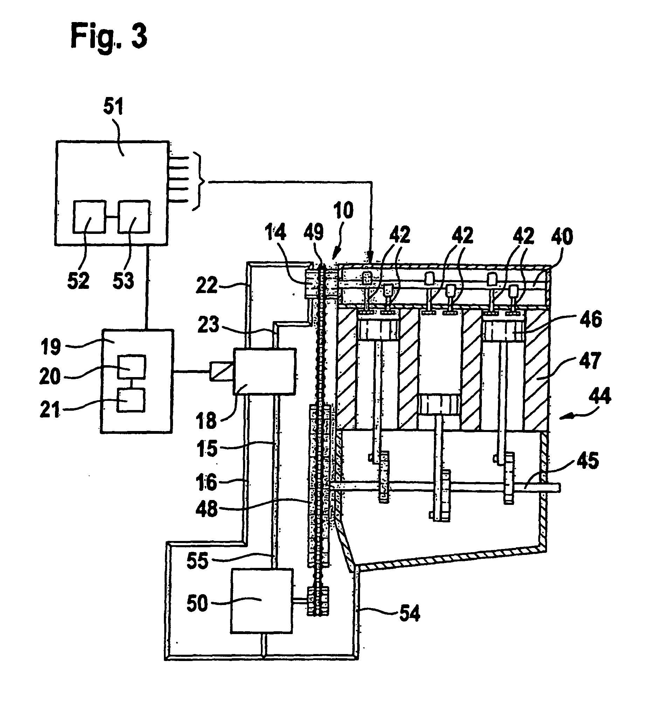

Über das Schaltventil 18, das getaktet betreibbar sein kann, erfolgt die druckseitige Ölzufuhr aus dem Ölkreislauf bzw. von der Öldruckpumpe 50 der Brennkraftmaschine. Dabei wird das Schaltventil 18 von dem in der Fig. 3 dargestellten Steuergerät 19 angesteuert. In der in Fig. 2 dargestellten Schaltsituation des Schaltventils wird das Öl durch das Schaltventil 18 über die Zufuhr 15 und den ersten Zuflusskanal 22 in die ersten Kammern 12 zugeführt, während gleichzeitig in den zweiten Kammern 13 enthaltenes Öl durch den zweiten Zuflusskanal 23, über das Schaltventil und den Rückfluss 16 zum drucklosen Ölvorrat der Brennkraftmaschine zurückfließt. Dabei sind die ersten und zweiten Arbeitskammern 12 und 13 im Gehäuse 14 des Flügelzellenstellers 10 ausgebildet, das beispielsweise über eine Steuerkette synchron zur Kurbelwelle angetrieben ist. Durch das Ein- bzw. Ausströmende Hydrauliköl erhöht sich das Volumen der ersten Arbeitskammern 12 zu lasten der zweiten Arbeitskammern 13, weil die dazwischen als dichtende Kolben ausgebildeten Flügel 11 radial verdreht werden. Dabei sind die Flügel 11 mit der Nockenwelle 40 verbunden. Somit führt die Nockenwelle eine relative Drehbewegung bezüglich dem Gehäuse 14 des Nockenwellenstellers aus, die Winkellage der Nocken 41 ändert sich somit bezüglich einer Referenzposition, die vorgegeben ist. Bei der Referenzposition kann es sich beispielsweise um eine Position handeln, bei der die ersten bzw. die zweiten Arbeitskammern 12 bzw. 13 ihr maximales Volumen und die zweiten bzw. ersten Arbeitskammern 13 bzw. 12 ihr minimales Volumen aufweisen, wobei eine der beiden Stellungen insbesondere im Leerlaufbetrieb eingenommen wird. Bei diesen Stellungen befinden sich die Flügel 11 in einer ihrer beiden Hubendlagen im Gehäuse 14, die insbesondere durch Anschläge bzw. feststehende Wandungen des Gehäuses 14 definiert werden.

Die Veränderung des Volumens der Arbeitskammern 12, 13 erfolgt durch Verschieben der Flügel 11 des Flügelzellenstellers 10. Dabei wird die Nockenwelle um ihre Längsachse relativ zum Gehäuse 14 und bezüglich der Referenzposition verdreht. Somit wird der Zeitpunkt, an dem ein von einem Nocken 41 der Nockenwelle 40 betätigbares Ventil betätig wird, bezüglich der von der Steuerkette 49 vorgegebenen Rotation des Gehäuses verändert. Bezüglich einer hinsichtlich dieser Drehbewegung vorgegebenen Referenzposition wird das Ventil früher oder später geöffnet. Durch diese Verschiebung des Öffnungszeitpunktes können die Befüllungs- bzw. Ausschubvorgänge der Brennkammer der Brennkraftmaschine und damit auch die Verbrennungsvorgänge optimiert werden. Die Veränderung der Winkellage der Nocken bezüglich der Referenzlage erfolgt dabei vorzugsweise entsprechend einer vorgegebenen Kennlinie oder einem Kennfeld, das wenigstens von der Motordrehzahl abhängig ist.

Ist das Schaltventil 18 so ausgeführt, dass es nur zwei Schaltstellungen aufweist, so werden immer entweder die ersten oder die zweiten Arbeitskammern 12 oder 13 vollständig mit Öl befüllt und das Volumen der entsprechenden Arbeitskammern auf das Maximum erhöht, während die anderen zweiten oder ersten Arbeitskammern 13 oder 12 immer vollständig entleert werden, so dass ihr Volumen auf das Minimum reduziert werden. Der Nockenwellensteller 10 ist dann ein sogenannter Zwei-Punkt-Steller da er nur zwei alternativ einstellbare Schaltstellungen aufweist. Ist das Schaltventil 18 dagegen ein 3-Stellungsventil, das auch in der Lage ist, die ersten und die zweiten Arbeitskammern 12 bzw. 13 gleichzeitig zu sperren, so kann auch jede beliebige Zwischenstellung des Nockenwellenstellers 10 erzeugt und aufrechterhalten werden. Es ist dann ein sogenannter kontinuierlicher Steller.

Bei beiden Typen von Stellern treten undefinierte Lagen der Stellung dann auf, wenn ölzufuhrseitig der Öldruck nicht den erforderlichen Arbeitsdruck erreicht. Dies ist insbesondere dann der Fall, wenn die Öldruckpumpe 50 des Motorölkreislaufes, beispielsweise im Leerlaufbetrieb, förderseitig nicht ihren Nenndruck erreicht. Das zugeführte Öl steht nicht unter ausreichendem Druck, es strömt nicht in ausreichendem Maße in die zu befüllenden Arbeitskammern. Gleichzeitig entweicht das rückströmende Öl aus den entleerbaren Arbeitskammern. Gleichzeitig wirken aber die auf die Nockenwelle einwirkenden Schleppmomente. Sie werden über die Flügel an den Nockenwellensteller weitergeleitet und im Normalbetrieb über den anstehenden Öldruck abgefangen. Auch die über die Steuerkette auf das Gehäuse einwirkenden Momente auf den Nockenwellensteller wirken ein. Auch sie werden im Normalbetrieb durch den in den Arbeitskammern anstehenden Öldruck abgestützt so dass letztlich Kraftschluss zwischen Steuerkette und Nockenwelle gegeben ist. Ist der Öldruck nicht ausreichend, so ist der Kraftschluss wegen des einerseits zwar abfließenden Öls , des andererseits nicht mehr druckbeaufschlagt zugeführten Öls nicht mehr in ausreichender Form gegeben. Damit ist die Verschiebung der als zwischen den Arbeitskammern als Kolben wirkenden Flügel nicht definiert. Derartige Fälle können insbesondere dann auftreten, wenn die Viskosität des Öles aufgrund hoher Öltemperatur relativ niedrig ist. Auch in Fällen, in denen die Drehzahl sehr rasch abfällt - also der Gradient des Drehzahlabfalls einen Grenzwert von beispielsweise -500 Umdrehungen je Minute pro Sekunde unterschreitet, kann dies auftreten. Es ist auch möglich, dass die Motordrehzahl im Leerlauf nicht ausreichend hoch ist um den erforderlichen Öldruck im Ölkreislauf aufrechtzuerhalten. Diese Zustände eines auf ein niederes Niveau abfallenden Öldrucks sind zwar für den Betrieb der Brennkraftmaschine an sich nicht schädlich, sie führen aber wie oben erläutert, dazu dass nicht mehr sichergestellt ist, dass ein so betriebener Nockenwellensteller 11 die vorgegebene Stellung bezüglich der Referenzposition erreicht und aufrechterhält. Durch das Anheben der Leerlaufdrehzahl in diesen Umständen wird sichergestellt, dass der Öldruck der Brennkraftmaschine das erforderliche Niveau für das Verstellen des Nockenwellenstellers aufrechterhält. Dies geschieht in dem Verfahren gemäß der Fig. 1 zumindest solange bis der Nockenwellensteller die vorgegebene Stellung der Nockenwelle bezüglich der Referenzposition eingesteuert hat.

Die Fig. 3 zeigt in schematischer Darstellung eine erfindungsgemäße Brennkraftmaschine, bei der beispielsweise ein Nockenwellensteller Verwendung finden kann, nämlich einem Hubkolbenmotor. Der Nockenwellensteller ist dabei beispielsweise als ein Flügelzellensteller 10, wie er in der Fig. 2 in Schnittdarstellung gezeigt wird, ausgebildet. Mittels des Flügelzellenstellers 10 wird die Nockenwelle 40 bezüglich ihrer Winkellage in Bezug auf eine Referenzposition um ihre eigene Mittelachse verdreht. Die Nockenwelle 40 dient der Betätigung der Ventile 42, die den Lufteinlass oder Verbrennungsgasauslaß aus den Zylindern 47 schalten. In den Zylindern 47 sind die mit der Kurbelwelle 45 verbundenen Kolben 46 angeordnet, die durch die Verbrennungsvorgänge in den Zylindern 47 angetrieben werden. Mit der Kurbelwelle 45 ist das Treibrad 48 verbunden, das die Steuerkette 49 antreibt. Über die Steuerkette wird zum einen das Gehäuse des Flügelzellenstellers 10 und zum anderen die Antriebswelle der Öldruckpumpe 50 synchron zur Kurbelwellendrehung angetrieben.

Über das Motorsteuergerät 51, den darin beispielsweise in Speichern 52, wie Read-Only-Memorys, abgelegten Programmen und der Recheneinheit 53, sowie dem darin ermittelten Sollwert für die Leerlaufdrehzahl wird der Betrieb der Brennkraftmaschine 44 nicht nur für den Leerlaufbetrieb gesteuert.

Das Steuergerät 19 für den Nockenwellensteller beinhaltet ebenfalls eine Recheneinheit 20 sowie eine Speichereinheit 21, in der auf der Recheneinheit ausführbare Steuerprogramme abgelegt sind. Das Steuergerät 19 steuert zum einen das Schaltventil 18 an Zum anderen übermittelt es an das Motorsteuergerät 51 ein Signal, das die Vorgabe der Leerlaufdrehzahl beeinflusst und geeignet ist die Leerlaufdrehzahl von der vorgegebenen Solldrehzahl auf den Zwischenwert anzuheben.

Das Schaltventil 18, das von dem Steuergerät 19 angesteuert wird, schaltet die Versorgung des Flügelzellenverstellers 10 und dessen Arbeitskammern 12, 13 mit Hydrauliköl des Mötorölkreislaufs. Der Druck im Motorölkreislauf wird durch die Öldruckpumpe 50 erzeugt, die von der Steuerkette 49 angetrieben wird, und die beispielsweise aufgrund ihrer Auslegung im Leerlaufbetrieb nicht unbedingt den erforderlichen Nennöldruck erzeugt. Die Pumpe saugt das Öl aus dem Ölsumpf der Brennkraftmaschine über die Ansaugleitung 54 und speist die Druckleitung 55, die den Motor mit Öl versorgt und von der auch das Schaltventil 18 gespeist wird. Von Schaltventil 18 führt die Zufuhrleitung zum Befüllen der Arbeitskammern 12,13 zum Flügelzellensteller 10, während das Öl zum Entleeren der Arbeitskammern 12,13 über den Rückfluss 16 zur Saugseite der Öldruckpumpe zurückgeführt wird.

## Patentansprüche

1. Verfahren zum Betreiben einer Brennkraftmaschine, insbesondere für ein Kraftfahrzeug, mit variabler Nockenwellenverstellung, wobei die Winkellage von Ventile der Brennkraftmaschine betätigenden, auf Nockenwellen angeordneten Nocken bezüglich einer Referenzposition in Abhängigkeit wenigstens der Drehzahl der Brennkraftmaschine veränderbar ist, wobei die Verstellung der Nocken durch einen hydraulisch betätigten Nockenwellensteller erfolgt, wozu der Nockenwellensteller durch einen Kolben voneinander getrennte Paare von Arbeitskammern aufweist, die wechselweise druckbeaufschlagbar sind und durch dessen maximalen Hub die beiden Betätigungsendlagen der Verstellung definiert werden,
**dadurch gekennzeichnet, dass** die Leerlaufdrehzahl in Abhängigkeit der Stellung des Nockenwellenstellers (10) bezüglich der Referenzposition bestimmt wird,
wobei die Leerlaufdrehzahl gegenüber einem vorgegebenen Sollwert auf einen erhöhten Zwischenwert angehoben wird, wenn die Stellung der Nockenwelle bezüglich der Referenzposition von einer vorgegebenen Stellung abweicht,
und die vorgegebene Stellung eine mechanisch arretierbare Stellung ist, wobei die Stellung durch den Eingriff eines vorzugsweise hydraulisch ansteuerbaren Rastelements definiert ist, das zum mechanischen Arretieren zumindest mittelbar die Position des Kolbens bezüglich der Arbeitskammern fixiert, wobei es sich bei der mechanisch arretierbaren Stellung vorzugsweise um die Referenzposition handelt.

2. Verfahren nach Anspruch 1, **dadurch gekennzeichnet, dass** der erhöhte Zwischenwert vorgegeben wird, wenn bei fallender Motordrehzahl der Drehzahlgradient einen Grenzwert überschreitet.

3. Verfahren nach Anspruch 1 oder 2, **dadurch gekennzeichnet, dass** die Leerlaufdrehzahl von dem erhöhten Zwischenwert auf den vorgegebenen Sollwert abgesenkt wird, wenn wenigstens eines der nachfolgenden Kriterien erfüllt ist:
• die Stellung der Nockenwelle bezüglich der Referenzposition entspricht der vorgegebenen Stellung;
• die seit dem Anheben der Leerlaufdrehzahl auf den erhöhten Zwischenwert verstrichene Zeit überschreitet einen Zeitgrenzwert;
• die Betriebsanforderung an die Brennkraftmaschine oberhalb der Leerlaufdrehzahl, insbesondere oberhalb des Zwischenwertes liegt.

4. Brennkraftmaschine, insbesondere für ein Kraftfahrzeug, mit variabler Nockenwellenverstellung, mit einem hydraulischen Nockenwellenversteller zum Verstellen der Winkellage von Ventile der Brennkraftmaschine betätigenden, auf Nockenwellen angeordneten Nocken bezüglich einer Referenzposition in Abhängigkeit wenigstens der Drehzahl der Brennkraftmaschine, wobei der Nockenwellensteller von einem Kolben voneinander getrennte Paare von Arbeitskammern aufweist, die wechselweise druckbeaufschlagbar sind und dessen maximaler Hub die beiden Betätigungsendlagen definiert, mit einem Steuergerät zum Steuern der Stellung der Nockenwelle bezüglich der Referenzposition,
**dadurch gekennzeichnet, dass** die Leerlaufdrehzahl der Brennkraftmaschine durch das Steuergerät (19) in Abhängigkeit der Stellung des Nockenwellenstellers (10) bezüglich der Referenzposition bestimmt wird,
wobei die Leerlaufdrehzahl gegenüber einem vorgegebenen Sollwert auf einen erhöhten Zwischenwert angehoben wird, wenn die Stellung der Nockenwelle bezüglich der Referenzposition von einer vorgegebenen Stellung abweicht
und die vorgegebene Stellung eine mechanisch arretierbare Stellung ist, wobei die Stellung durch den Eingriff eines vorzugsweise hydraulisch ansteuerbaren Rastelements definiert ist, das zum mechanischen Arretieren zumindest mittelbar die Position des Kolbens bezüglich der Arbeitskammern fixiert, wobei es sich bei der mechanisch arretierbaren Stellung vorzugsweise um die Referenzposition handelt.

5. Brennkraftmaschine nach Anspruch 4, **dadurch gekennzeichnet, dass** die arretierbare Stellung des Nockenwellenstellers (10) im Leerlauf der Brennkraftmaschine einzusteuern ist, wobei über die Steuereinrichtung ein Erhöhen der Leerlaufdrehzahl zum Erreichen der arretierbaren Stellung vorgesehen ist.

6. Brennkraftmaschine nach einem der Ansprüche 4 oder 5, **dadurch gekennzeichnet, dass** der hydraulische Nockenwellenversteller vom Ölkreislauf der Brennkraftmaschine gespeist ist.

7. Brennkraftmaschine nach einem der Ansprüche 4 bis 6, **dadurch gekennzeichnet, dass** der Nockenwellensteller abwechselnd eine der beiden Endlagen einnimmt, wobei eine der beiden Endlagen einem Drehzahlbereich der Brennkraftmaschine zugeordnet ist, der die Leerlaufdrehzahl beinhaltet und diese eine arretierbare Stellung des Nockenwellenstellers ist, während die andere Endlage einem anderen Betriebsbereich der Brennkraftmaschine zugeordnet ist und wobei die von den Nocken der Nockenwelle betätigten Ventile vorzugsweise Auslassventile der Brennkraftmaschine sind.

## Claims

1. Method for operating an internal combustion engine, in particular for a motor vehicle, with variable camshaft adjustment, the angular position of cams which actuate valves of the internal combustion engine and are arranged on camshafts being adjustable with respect to a reference position as a function at least of the speed of the internal combustion engine, the adjustment of the cams being effected by a hydraulically actuated camshaft adjuster, for which purpose the camshaft adjuster has pairs of working chambers which are separated from one another by a piston, to which pressure can be applied alternately and the maximum displacement of which piston defines the two actuation limit positions of the adjustment,
**characterized in that** the idling speed is determined as a function of the position of the camshaft adjuster (10) with respect to the reference position,
the idling speed being raised to an increased intermediate value compared to a predetermined setpoint value if the position of the camshaft with respect to the reference position deviates from a predetermined position, and the predetermined position is a mechanically lockable position, this position being defined by the intervention of a preferably hydraulically drivable latching element, which, for mechanical locking purposes, at least indirectly fixes the position of the piston with respect to the working chambers, the mechanically lockable position preferably being the reference position.

2. Method according to Claim 1, **characterized in that** the increased intermediate value is predetermined if the engine speed gradient when the engine speed is dropping exceeds a limit value.

3. Method according to Claim 1 or 2, **characterized in that** the idling speed is lowered from the increased intermediate value to the predetermined setpoint value if at least one of the following criteria is satisfied:
• the position of the camshaft with respect to the reference position corresponds to the predetermined position;
• the time which has elapsed since the idling speed was raised to the increased intermediate value exceeds a time limit value;
• the operating demand imposed on the internal combustion engine is above the idling speed, in particular above the intermediate value.

4. Internal combustion engine, in particular for a motor vehicle, with variable camshaft adjustment, having a hydraulic camshaft adjuster for adjusting the angular position of cams which actuate valves of the internal combustion engine and are arranged on camshafts with respect to a reference position as a function at least of the speed of the internal combustion engine, the camshaft adjuster having pairs of working chambers which are separated from one another by a piston, to which pressure can be applied alternately and the maximum displacement of which piston defines the two actuation limit positions, having a control unit for controlling the position of the camshaft with respect to the reference position,
**characterized in that** the idling speed of the internal combustion engine is determined by the control unit (19) as a function of the position of the camshaft adjuster (10) with respect to the reference position,
the idling speed being raised to an increased intermediate value compared to a predetermined setpoint value if the position of the camshaft with respect to the reference position deviates from a predetermined position, and the predetermined position is a mechanically lockable position, this position being defined by the intervention of a preferably hydraulically drivable latching element, which, for mechanical locking purposes, at least indirectly fixes the position of the piston with respect to the working chambers, the mechanically lockable position preferably being the reference position.

5. Internal combustion engine according to Claim 4, **characterized in that** the lockable position of the camshaft adjuster (10) can be set when the internal combustion engine is in idling mode, with provision for the control device to increase the idling speed in order to reach the lockable position.

6. Internal combustion engine according to Claim 4 or 5, **characterized in that** the hydraulic camshaft adjuster is fed by the oil circuit of the internal combustion engine.

7. Internal combustion engine according to one of Claims 4 to 6, **characterized in that** the camshaft adjuster alternately adopts one of the two limit positions, one of the two limit positions being assigned to a speed range of the internal combustion engine which includes the idling speed, this position being a lockable position of the camshaft adjuster, while the other limit position is assigned to a different operating range of the internal combustion engine, and the valves which are actuated by the cams of the camshaft preferably being exhaust valves of the internal combustion engine.

## Revendications

1. Procédé pour faire fonctionner un moteur à combustion interne, en particulier pour un véhicule automobile à correction variable du calage de l'arbre à cames et dans lequel la position angulaire de cames montées sur des arbres à cames, qui actionnent des soupapes du moteur à combustion interne, par rapport à une position de référence, peut être modifiée en fonction d'au moins la vitesse de rotation du moteur à combustion interne, le réglage des cames étant effectuée par un positionneur d'arbre à cames actionné hydrauliquement, le positionneur d'arbre à cames présentant des paires de chambres de travail séparées l'une de l'autre par un piston et qui peuvent être sollicitées alternativement par une pression et dont la course maximale définit les deux positions extrêmes d'actionnement du réglage,
**caractérisé en ce que**
la vitesse de rotation de ralenti est déterminée en fonction de la position du positionneur d'arbre à cames (10) par rapport à la position de référence, en augmentant la vitesse de rotation de ralenti par rapport à une valeur de consigne prédéterminée jusqu'à une valeur intermédiaire relevée lorsque le calage de l'arbre à cames relativement à la position de référence s'écarte d'un calage prédéterminé,
et le calage prédéterminé étant un calage verrouillable mécaniquement, le calage étant défini par l'engagement d'un élément d'encliquetage qui peut de préférence être commandé hydrauliquement et qui, pour le verrouillage mécanique, immobilise au moins indirectement la position du piston par rapport aux chambres de travail, le calage verrouillable mécaniquement étant de préférence la position de référence.

2. Procédé selon la revendication 1,
**caractérisé en ce que**
la valeur intermédiaire relevée est prédéterminée au moment où, au cours d'une chute de la vitesse de rotation du moteur, le gradient de vitesse de rotation devient supérieur à une valeur limite.

3. Procédé selon la revendication 1 ou 2,
**caractérisé en ce que**
la vitesse de rotation de ralenti est ramenée de la valeur intermédiaire relevée à la valeur de consigne prédéterminée lorsqu'au moins un des critères suivants est satisfait :
- le calage de l'arbre à cames relativement à la position de référence correspond au réglage prédéterminé ;
- le temps qui s'est écoulé depuis l'augmentation de la vitesse de rotation de ralenti jusqu'à la valeur intermédiaire relevée est plus long qu'une limite de temps ;
- le régime de fonctionnement demandé au moteur à combustion interne se trouve au-dessus de la vitesse de rotation de ralenti, en particulier au-dessus de la valeur intermédiaire.

4. Moteur à combustion interne, en particulier pour un véhicule automobile à correction variable du calage de l'arbre à cames, comprenant un positionneur d'arbre à cames hydraulique destiné à faire varier la position angulaire de cames montées sur des arbres à cames et qui actionnent des soupapes du moteur à combustion interne, par rapport à une position de référence en fonction d'au moins de la vitesse de rotation du moteur à combustion interne, le positionneur d'arbres à cames présentant des paires de chambres de travail séparées l'une de l'autre par un piston, qui peuvent être sollicitées alternativement par une pression et dont la course maximale définit les deux positions extrêmes d'actionnement, et un appareil de commande destiné à commander le calage de l'arbre à cames relativement à la position de référence,
**caractérisé en ce que**
la vitesse de rotation de ralenti du moteur à combustion interne est déterminée par l'appareil de commande (19) en fonction du calage du positionneur d'arbres à cames (10) relativement à la position de référence,
en augmentant la vitesse de rotation de ralenti par rapport à une valeur de consigne prédéterminée jusqu'à une valeur intermédiaire relevée lorsque le calage de l'arbre à cames par rapport à la position de référence s'écarte d'un calage prédéterminé,
et le calage prédéterminé étant un calage verrouillable mécaniquement, le calage est défini par l'engagement d'un élément d'encliquetage pouvant de préférence être commandé hydrauliquement et qui immobilise au moins indirectement la position du piston par rapport aux chambres de travail pour réaliser le verrouillage mécanique, le calage verrouillable mécaniquement étant de préférence la position de référence.

5. Moteur à combustion interne selon la revendication 4,
**caractérisé en ce que**
le calage du positionneur d'arbre à cames (10) verrouillable doit être fixé au ralenti du moteur à combustion interne, et le dispositif de commande est prévu pour pouvoir élever la vitesse de rotation de ralenti jusqu'à atteindre le calage verrouillable.

6. Moteur à combustion interne selon une des revendications 4 ou 5,
**caractérisé en ce que**
le positionneur hydraulique de l'arbre à cames est alimenté par le circuit d'huile du moteur à combustion interne.

7. Moteur à combustion interne selon une des revendications 4 à 6,
**caractérisé en ce que**
le positionneur d'arbres à cames prend alternativement une des deux positions extrêmes, une des deux positions extrêmes étant associée à un intervalle de vitesse de rotation du moteur à combustion interne qui contient la vitesse de rotation de ralenti et cette position étant un calage du positionneur d'arbres à cames verrouillable, tandis que l'autre position extrême est associée à un autre intervalle de fonctionnement du moteur à combustion interne, et les soupapes actionnées par les cames de l'arbre à cames étant de préférence des soupapes d'échappement du moteur à combustion interne.
